# EUROPEAN PATENT SPECIFICATION

(11) **EP 1 503 439 B1**
(45) Date of publication and mention of the grant of the patent: **07.07.2010**
(21) Application number: 04018008.5
(22) Date of filing: 29.07.2004
(51) Int. Cl.: H01M 4/88, H01M 4/86

(54) **Process of producing electrode paste**
Herstellungsverfahren von Elektrodenpaste
Procédé de fabrication d'une pâte d'électrode

(30) Priority: 30.07.2003 JP 2003282712
(43) Date of publication of application: 02.02.2005
(73) Proprietor: JSR Corporation, Tokyo (JP); HONDA MOTOR CO., LTD., Tokyo (JP)
(72) Inventor: KAWAI, Junji c/o JSR Corporation,, Tokyo (JP); HIGAMI, Makoto c/o JSR Corporation,, Tokyo (JP); GOTO, Kohei c/o JSR Corporation,, Tokyo (JP); TAKAHASHI, Ryoichiro c/o Honda R&D Co., Ltd.,, Saitama, (JP); ASANO, Yoichi c/o Honda R&D Co., Ltd.,, Saitama, (JP)
(74) Representative: Dey, Michael

(56) References cited:
- EP-A- 1 079 451
- EP-A1- 1 295 968
- WO-A-2004/036678
- JP-A- 2 027 661
- US-A- 5 330 860
- US-A1- 2003 078 157

## Description

### FIELD OF THE INVENTION

The present invention relates to a process of producing an electrode paste for fuel cell electrode, and to an electrode paste composition.

### BACKGROUND OF THE INVENTION

Polymer electrolyte fuel cells produce electric energy from electrochemical reaction between a hydrogen-containing fuel gas and an oxygen-containing oxidizing gas such as air. The polymer electrolyte fuel cell has a polymer electrolyte membrane which selectively conducts hydrogen ions. The polymer electrolyte membrane constitutes a central part of the fuel cell and is sandwiched between catalyst layers and further between electrode substrates. Each pair of the catalyst layer and the electrode substrate forms an electrode. When a gas diffusion layer is disposed between the catalyst layer and the electrode substrate, these three constitute an electrode. In the fuel cell, a plurality of polymer electrolyte membrane-electrode assemblies are electrically connected in series via a conductive separator in which fuel channels are formed for the passage of reactant gases

US 5,330,860 discloses an electrode layer of an ion exchange membrane formed by printing an ink of catalytically active particles on the surface of the membrane, wherein the electrode ink comprises catalytically active particles, a hydrocarbon having at least one ether, epoxy or ketone linkage and an alcohol group, preferably 1-methoxy, 2-propanol and optionally a binder, preferably perfluorinated sulfonyl fluoride polymer or perfluorinated sulfonic acid polymer.

EP 1 079 451 A2 discloses a polymer electrolyte fuel cell which includes an electrode comprising a porous catalyst layer formed on the surface of a polymer electrolyte membrane, or an electrode comprising a porous catalyst layer formed on a surface of a porous conductive base material, the porous catalyst layer facing the polymer electrolyte membrane. Said porous catalyst layer can be formed by atomizing an ink containing a catalyst powder (e.g. a carbon powder with a nobel metal carried thereon) dispersed therein and directly spraying it onto a surface of the polymer electrolyte membrane or the porous conductive base material. It is further disclosed that the ink may contain a polymer electrolyte, a carbon powder, a water repellent agent and the like, in addition to the catalyst powder.

EP 1 295 968 A1 discloses a gas diffusion electrode including a gas supply layer or/and a reaction layer, as a compositional material, which are each formed on a surface of a conductive base through deposit by electrophoresis of gas diffusion electrode materials comprising microparticles of fluororesin, microparticles of carbon black and catalyst dispersed in dispersion medium.

JP 02 027 661 describes an electrolyte catalyst layer for a fuel cell comprising carbon fibers, catalyst grains and fluororesin grains. It is reported that due to the carbon fibers high porosity and large air holes are introduced, the feed of reaction gas is increased and an electrolyte is sufficiently fed by wetting the carbon fibers.

The catalyst layer in the electrode is generally prepared by coating the electrode substrate with a paste that contains carbon black particles which support metal catalyst such as platinum and a polymer electrolyte, and drying the resultant coating (see Patent Document 1).
Patent Document 1: JP-A-2003-59505

However, the electrode pastes conventionally used have nonuniform dispersion of particles and thus storage instability. The storage stability may be improved by mixing carbon black, a polymer electrolyte, an organic solvent and the like after addition of a dispersant. But the resultant paste composition gives a catalyst layer in which the catalyst-supporting carbon and the polymer electrolyte have so a close relation that the pore volume is insufficient. As a consequence, the fuel and oxygen gases cannot contact with the catalyst adequately and the water produced causes flooding and like problems. Therefore, the fuel cells having such electrode layers exhibit lowered generating performance.

### OBJECTS OF THE INVENTION

The present invention has been made in order to solve the aforesaid problems of the conventional art. Therefore, it is an object of the invention to provide a process of producing an electrode paste having excellent storage stability and capable of forming a catalyst layer that has a sufficient pore volume for high generating performance. A further object of the invention is to provide an electrode paste composition having the above properties.

### DISCLOSURE OF THE INVENTION

The present inventors have found that separate addition of a dispersant at a predetermined time in the production of an electrode catalyst paste enables control of the mean particle diameter of dispersed particles and control of adsorption of the dispersant onto the dispersed particles, with the result that an electrode paste is obtained which exhibits good storage stability and can give a catalyst layer having a sufficient pore volume for high generating performance.

The process of producing an electrode paste according to the present invention comprises mixing and agitating carbon black supporting a catalyst metal, a polymer electrolyte and an organic solvent thereby to finely disperse the carbon black to a predetermined mean particle diameter of 1.0 to 20 µm of particles dispersed in the mixed solution, and admixing a dispersant to the mixed solution and agitating the mixture to obtain a paste in which particles having a mean particle diameter of 0.2 to 5.0 µm are uniformly dispersed.

In a further embodiment, the process of producing an electrode paste according to the present invention comprises mixing and agitating the aforesaid ingredients and carbon fiber thereby to finely disperse the carbon black, and admixing a dispersant to the mixed solution.

In a still further embodiment, the process of producing an electrode paste according to the present invention comprises mixing and agitating the aforesaid ingredients and water thereby to finely disperse the carbon black, and admixing a dispersant to the mixed solution.

### EFFECTS OF THE INVENTION

The processes of the invention can produce an electrode paste having excellent storage stability and capable of giving a catalyst layer that has a sufficient pore volume for high generating performance.

The electrode paste compositions of the invention have excellent storage stability and can give a catalyst layer that has a sufficient pore volume for high generating performance.

### PREFERRED EMBODIMENTS OF THE INVENTION

Hereinbelow, the present invention will be described in detail.

The process of producing an electrode paste according to the invention first performs mixing and agitation of carbon black supporting a catalyst metal (hydrogen reduction catalyst), a polymer electrolyte and an organic solvent thereby to gradually pulverize the carbon black into fine particles. The agitation is continued until particles dispersed in the mixed solution have a predetermined mean particle diameter of 1.0 to 20 µm, thereby obtaining a mixed solution in which particles having a predetermined mean particle diameter are uniformly dispersed. The mean particle diameter of the dispersed particles in the mixed solution may be controlled by changing the agitating time or rate depending on conditions. Where necessary, at least either carbon fiber or water may be added together with the aforesaid ingredients.

Subsequently, a dispersant is admixed to the mixed solution and the mixture is agitated to give a paste in which particles having a predetermined mean particle diameter of 0.2 to 5.0 µm are uniformly dispersed.

As described above, the dispersant is added separately from the other ingredients at a predetermined time. This allows control of the mean particle diameter of dispersed particles and control of adsorption of the dispersant onto the dispersed particles. This separate addition of the dispersant enables the resultant electrode paste composition to exhibit excellent storage stability, to have an appropriate mean particle diameter of the dispersed particles, and to give a catalyst layer that has a sufficient pore volume for high generating performance.

Hereinbelow, each ingredient will be described.

### <Catalyst metal>

The catalyst metal (hydrogen reduction catalyst) is preferably a noble metal catalyst such as platinum, palladium, gold, ruthenium or iridium. The noble metal catalysts may contain two or more elements, such as noble metal alloys or mixtures of noble and dissimilar metals.

### <Carbon black>

For use as the carrier carbon black for the aforesaid catalyst metal, oil furnace blacks, channel blacks, lamp blacks, thermal blacks, acetylene blacks and the like are preferable due to their good electron conductivities and large specific surface areas.

The oil furnace blacks include those carbon blacks commercially available under the trademarks of VULCAN XC-72, VULCAN P, BLACK PEARLS 880, BLACK PEARLS 1100, BLACK PEARLS 1300, BLACK PEARLS 2000, REGAL 400 (all available from Cabot Corporation), KETJENBLACK EC (available from Lion Corporation), and products Nos. 3150 and 3250 of Mitsubishi Chemical Corporation. The acetylene blacks include DENKA BLACK^{™} (available from Denki Kagaku Kogyo K.K.).

Furthermore, natural graphites, pitches, cokes, carbon, and synthetic graphites obtained from organic compounds such as polyacrylonitriles, phenolic resins and furan resins, are employable.

These carbon blacks may be in the form of particles or fibers.

### <Polymer electrolyte>

The polymer electrolyte for use in the invention is preferably a polymer having proton exchange groups for enhancing the proton conductivity in the catalyst layer. The proton exchange groups include sulfonic groups, carboxylic groups and phosphoric groups. Although the polymer with such proton exchange groups may be selected without limitation, a proton-exchange polymer composed of a fluoroalkyl main chain and a fluoroalkyl ether side chain, or a sulfonated polyarylene may be preferably employed. Moreover, fluorine-containing polymers, ethylene or styrene polymers, copolymers and blends thereof that contain the proton exchange groups are also employable.

### <Organic solvent>

The organic solvents for use in the invention include methanol, ethanol, n-propyl alcohol, 2-propanol, 2-methyl-2-propanol, 2-butanol, isobutyl alcohol, n-butyl alcohol, 2-methyl-1-propanol, 1-pentanol, 2-pentanol, 3-pentanol, 2-methyl-1-butanol, 3-methyl-1-butanol, 2-methyl-2-butanol, 3-methyl-2-butanol, 2,2-dimethyl-1-propanol, cyclohexanol, 1-hexanol, 2-methyl-1-pentanol, 2-methyl-2-pentanol, 4-methyl-2-pentanol, 2-ethyl-1-butanol, 1-methylcyclohexanol, 2-methylcyclohexanol, 3-methylcyclohexanol, 4-methylcyclohexanol, 1-octanol, 2-octanol, 2-ethyl-1-hexanol, furan, tetrahydrofuran, tetrahydropyran dioxane, butyl ether, phenyl ether, isopentyl ether, diethoxyethane, bis(2-methoxyethyl)ether, bis (2-ethoxyethyl) ether, cineole, benzyl ethyl ether, anisole, phenetole, acetal, acetone, methyl ethyl ketone, 2-pentanone, 3-pentanone, cyclopentanone, cyclohexanone, 2-hexanone, 4-methyl-2-pentanone, 2-heptanone, 2,4-dimethyl-3-pentanone, 2-octanone, n-butyl acetate, isobutyl acetate, sec-butyl acetate, pentyl acetate, isopentyl acetate, 3-methoxybutyl acetate, methyl butyrate, ethyl butyrate, methyl lactate, ethyl lactate, butyl lactate, dimethyl sulfoxide, N-methylformamide, N,N-dimethylformamide, N,N-diethylformamide, N,N-dimethylacetamide and N-methylpyrrolidone. These may be used singly or in combination of two or more kinds.

### <Dispersant>

The dispersants employable in the invention include:
anionic surfactants such as N-methyltauro oleic acid, potassium oleate/diethanolamine salts, triethanolamine alkylether sulfate, triethanolamine polyoxyethylene alkylether sulfate, amine salts of specially modified polyetherester acids, amine salts of higher fatty acid derivatives, amine salts of specially modified polyester acids, amine salts of high molecular weight polyetherester acids, amine salts of specially modified phosphates, amidoamine salts of high molecular weight polyester acids, amidoamine salts of special fatty acid derivatives, alkylamine salts of higher fatty acids and amidoamine salts of high molecular weight polycarboxylic acids;
cationic surfactants such as benzyldimethyl{2-[2-(P-1,1,3,3-tetramethylbutylphenoxy) ethoxy]ethyl}ammonium chloride, octadecylamine acetate, tetradecylamine acetate, octadecyltrimethylammonium chloride, tallowtrimethylammonium chloride, dodecyltrimethylammonium chloride, cocotrimethylammonium chloride, hexadecyltrimethylammonium chloride, behenyltrimethylammonium chloride, cocodimethylbenzylammonium chloride, tetradecyldimethylbenzylammonium chloride, octadecyldimethylbenzylammonium chloride, dioleyldimethylammonium chloride, quaternary salt of 1-hydroxyethyl-2-tallowimidazoline, 2-heptadecenyl-hydroxyethylimidazoline, stearamidoethyldiethylamine acetate, stearamidoethyldiethylamine hydrochloride, triethanolamine monostearate formate, alkylpyridium salts, ethylene oxide adducts with higher alkylamines, polyacrylamide amine salts, modified polyacrylamide amine salts and quaternary ammonium iodide of perfluoroalkyl;
ampholytic surfactants such as dimethylcocobetaine, dimethyllaurylbetaine, laurylaminoethylglycinesodium, sodium laurylaminopropionate, stearyldimethylbetaine, lauryldihydroxyethylbetaine, amidobetaine, imidazoliniumbetaine, lecithin, sodium 3-[ω-fluoroalkanoyl-N-ethylamino]-1-propanesulfonate and N-[3-(perfluorooctanesulfonamido)propyl]-N,N-dimethyl-N-carboxymethyleneammoniumbetaine; and
nonionic surfactants such as cocofatty acid diethanolamide (1:2 type), cocofatty acid diethanolamide (1:1 type), tallow diethanolamide (1:2 type), tallow diethanolamide (1:1 type), oleic acid diethanolamide (1:1 type), hydroxyethyl laurylamine, polyethyleneglycol laurylamine, polyethyleneglycol cocoamine, polyethyleneglycol stearylamine, polyethyleneglycol tallowamine, polyethyleneglycol tallowpropylenediamine, polyethyleneglycol dioleylamine, dimethyllaurylamine oxide, dimethylstearylamine oxide, dihydroxyethyllaurylamine oxide, perfluoroalkylamine oxide and polyvinylpyrrolidone. These may be used singly or in combination of two or more kinds. Of these, the anionic and cationic surfactants are preferred. The surfactants ranging in molecular weight from 5,000 to 30,000 are preferable.

The surfactants give the electrode paste composition good storage stability and fluidity, and also enable excellent application properties.

### <Water>

The electrode paste composition may optionally contain water.

Addition of water to the electrode paste composition is effective to reduce the risk of heat generation and ignition in the preparation of the electrode paste.

### <Carbon fiber>

The electrode paste composition produced by the process according to the invention may optionally contain carbon fiber.

The carbon fibers employable in the invention include rayon carbon fibers, PAN carbon fibers, Ligunin-Poval carbon fibers, pitch carbon fibers and vapor grown carbon fibers. Of these, the vapor grown carbon fibers are preferable.

Addition of the carbon fiber enables the electrode paste composition to give an electrode layer having a larger pore volume. Therefore, the diffusibility of the fuel and oxygen gases may be enhanced and the flooding of water produced or other similar problems will be prevented, thus leading to improvement in generating performance.

In the production of the electrode paste composition, the carbon black supporting the catalyst metal is preferably used in an amount of 1 to 20% by mass, and more preferably 3 to 10% by mass based on all the ingredients.

When the amount of the carbon black is less than 1% by mass, the electrode reactivity will be lowered, and when it exceeds 20% by mass, the electrode paste composition will be so viscous that the application may produce nonuniform effect.

The polymer electrolyte is preferably used in an amount of 1 to 30% by mass, and more preferably 1 to 15% by mass based on all the ingredients.

Any amounts of the polymer electrolyte less than 1% by mass will lead to lowered proton conductivity. The polymer electrolyte, when used in such an insufficient amount, cannot work as a binder and thus the formation of electrode may fail. Also, when the polymer electrolyte is used in an amount over 30% by mass, the pore volume of the electrode will greatly decrease.

The organic solvent is preferably used in an amount of 1 to 95% by mass, and more preferably 30 to 80% by mass based on all the ingredients. When the organic solvent is used in amounts from 1 to 95% by mass, excellent coating properties can be obtained in the production of electrodes.

The dispersant is preferably used in an amount of 0.01 to 10% by mass, and more preferably 0.05 to 2% by mass based on all the ingredients. When the dispersant is used in amounts of 0.01 to 10% by mass, the electrode paste composition can exhibit excellent storage stability and flowability.

The optional carbon fiber is preferably used in an amount of up to 20% by mass, and more preferably from 1 to 10% by mass based on all the ingredients. Addition of the carbon fiber leads to increase of the pore volume of the electrode. However, any amount thereof exceeding 20% by mass results in lowered electrode reactivity.

The optional water is preferably used in an amount of up to 70% by mass, and more preferably from 5 to 30% by mass based on all the ingredients. When the water is used in amounts within the above range, the risk of heat generation and ignition in the production of the electrode paste composition may be reduced.

The electrode paste composition is produced from the aforesaid ingredients by the process according to the invention. The carbon black supporting the catalyst metal, the polymer electrolyte, the organic solvent, and optionally at least either the carbon fiber or water are admixed and agitated to gradually pulverize the carbon black into fine particles. The agitation is continued until the particles dispersed in the mixed solution have a predetermined mean particle diameter of 1.0 to 20 µm, thereby obtaining a mixed solution in which the particles having a predetermined mean particle diameter are dispersed.

The agitation may be performed by the conventional apparatus without limitation. Preferably, the agitation is carried out such that a low shear is applied and the mean particle diameter is controlled by agitation time. The mixed solution of the above ingredients except the dispersant is a uniform solution that contains dispersed particles whose mean particle diameter is 1.0 to 20 µm, and more preferably 2.0 to 10 µm. The mean particle diameter less than 1. 0 µm leads to insufficient storage stability and causes difficulty in obtaining a catalyst layer having a sufficient pore volume required for high generating performance. Contrary, when the mean particle diameter exceeds 20 µm, the solution is unlikely to become uniform.

Subsequently, the dispersant (dispersant solution) is admixed to the above mixed solution and agitated to give a paste in which particles having a predetermined mean particle diameter of 0.2 to 5.0 µm are uniformly dispersed. The agitation is desirably carried out with control of agitation time or the like so as to achieve a mean particle diameter of the dispersed particles preferably ranging from 0.2 to 5. 0 µm, and more preferably from 0.4 to 3.0 µm. The mean particle diameter less than 0.2 µm causes difficulty in obtaining a catalyst layer having a sufficient pore volume required for high generating performance. Contrary, when the mean particle diameter exceeds 5.0 µm, application properties of the paste will be lowered and the resultant electrode may be so brittle that the electrode structure may not be maintained.

Simultaneous mixing of the dispersant solution with the other ingredients results in difficult uniform adsorption of the dispersant onto the particles, prolonged agitation time, a catalyst layer having an insufficient pore volume to cause low generating performance, and poor storage stability.

The electrode paste composition produced as described above may be applied on an electrode substrate or a polymer electrolyte membrane (proton conductive membrane).

The application methods include brushing, brush coating, bar coating, knife coating, screen printing and spray coating. Alternatively, the electrode paste composition may be applied on a substrate (transfer substrate) and thereafter the thus-formed catalyst layer may be transferred onto an electrode substrate or a proton conductive membrane. The transfer substrate used herein may be a polytetrafluoroethylene (PTFE) sheet or a release-coated glass or metal plate.

The electrode substrate on which the paste produced by the process according to claim 1 is pasted may be selected from those electrode substrates commonly used in fuel cells. Examples thereof include porous conductive sheets mainly composed of conductive substances. The conductive substances are, for example, calcined polyacrylonitriles, calcined pitches, carbon materials such as graphites and expanded graphites, stainless steel, molybdenum and titanium. The conductive substances may have the form of fibers or particles, but are not limited thereto. Fibrous conductive inorganic substances (inorganic conductive fibers), particularly carbon fibers, are preferable. The porous conductive sheets made of such inorganic conductive fibers may be woven or nonwoven fabrics. The woven fabrics include plain fabrics, twill fabrics, satin fabrics, designed fabrics and figured fabrics. Exemplary nonwoven fabrics are nonwoven fabrics obtained by papermaking methods, needle punched nonwoven fabrics, spunbonded nonwoven fabrics, water jet punched nonwoven fabrics and meltblown nonwoven fabrics. Knitted fabrics of inorganic conductive fibers are also usable as the porous conductive sheets.

These fabrics, particularly when composed of carbon fibers, are preferably woven fabrics obtained through carbonization or graphitization of plain fabrics of flame-resistant spun yarns, or nonwoven fabrics obtained through carbonization or graphitization of needle punched or water jet punched nonwoven fabrics of flame-resistant yarns, or nonwoven mats obtained by papermaking technique for flame-resistant yarns, or carbonized or graphitized yarns. For example, carbon paper TGP series and SO series (available from Toray Industries, Inc.) and carbon cloths produced by E-TEK may be preferably used.

According to a preferred embodiment of the invention, conductive particles such as carbon blacks, or conductive fibers such as carbon fibers may be incorporated in the porous conductive sheet used in the invention. The incorporation is advantageous in that such conductive materials play an auxiliary roll to provide higher conductivity.

### EXAMPLES

The present invention will be hereinafter described in greater detail by the following Examples.

### [Example 1]

### [Preparation of paste A]

A 110 ml glass bottle was charged with:
55 g of nylon balls 9.5 mm in diameter (trade name: Nylon balls, available from AS ONE CORPORATION);
3.47 g of platinum-supporting carbon black particles (Pt content: 46% by mass, carbon black content: 54% by mass);
5.61 g of distilled water;
12.84 g of a water-alcohol solution containing 20.6% Nafion (trade name, available from Dupont) (water:alcohol = 20:60);
21.05 g of n-propyl alcohol; and
0.95 g of vapor grown carbon fiber (trade name: VGCF, available from Showa Denko K.K.).

They were agitated with a wave rotor at 60 rpm for 30 min to give a mixed solution. Subsequently, 0.079 g of a dispersant (trade name: DA234, available from Kusumoto Chemicals, Ltd.) was added to the mixed solution, and the mixture was agitated with a wave rotor at 60 rpm for 30 min to give a paste A having a viscosity of 300 cp (25°C).

### [Example 2]

### [Preparation of paste B]

A 110 ml glass bottle was charged with:
55 g of zirconia balls 10 mm in diameter (trade name: YTZ balls, available from Nikkato Corporation);
3.47 g of platinum-supporting carbon black particles (Pt content: 46% by mass, carbon black content: 54% by mass);
5.61 g of distilled water;
12.84 g of a water-alcohol solution containing 20.6% Nafion (trade name, available from Dupont) (water:alcohol = 20:60);
21.05 g of n-propyl alcohol; and
0.95 g of vapor grown carbon fiber (trade name: VGCF, available from Showa Denko K.K.).

They were agitated with a wave rotor at 60 rpm for 30 min to give a mixed solution. Subsequently, 0.079 g of a dispersant (trade name: DA234, available from Kusumoto Chemicals, Ltd.) was added to the mixed solution, and the mixture was agitated with a wave rotor at 60 rpm for 30 min to give a paste B having a viscosity of 350 cp (25°C).

### [Comparative Example 1]

### [Preparation of paste C]

A 110 ml glass bottle was charged with:
55 g of zirconia balls 10 mm in diameter (trade name: YTZ balls, available from Nikkato Corporation);
3.47 g of platinum-supporting carbon black particles (Pt content: 46% by mass, carbon black content: 54% by mass);
5.61 g of distilled water;
12.84 g of a water-alcohol solution containing 20.6% Nafion (trade name, available from Dupont) (water:alcohol = 20:60);
21.05 g of n-propyl alcohol; and
0.95 g of vapor grown carbon fiber (trade name: VGCF, available from Showa Denko K.K.).

They were agitated with a wave rotor at 60 rpm for 30 min to give a mixed solution. Subsequently, 0.079 g of a dispersant (trade name: DA234, available from Kusumoto Chemicals, Ltd.) was added to the mixed solution, and the mixture was agitated with a wave rotor at 60 rpm for 70 min to give a paste C having a viscosity of 650 cp (25°C).

### [Comparative Example 2]

### [Preparation of paste D]

A 110 ml glass bottle was charged with:
55 g of zirconia balls 10 mm in diameter (trade name: YTZ balls, available from Nikkato Corporation);
3.47 g of platinum-supporting carbon black particles (Pt content: 46% by mass, carbon black content: 54% by mass);
5.61 g of distilled water;
12.84 g of a water-alcohol solution containing 20.6% Nafion (trade name, available from Dupont) (water:alcohol = 20:60);
21.05 g of n-propyl alcohol; and
0.95 g of vapor grown carbon fiber (trade name: VGCF, available from Showa Denko K.K.).

They were agitated with a wave rotor at 200 rpm for 70 min to give a mixed solution. Subsequently, 0.079 g of a dispersant (trade name: DA234, available from Kusumoto Chemicals, Ltd.) was added to the mixed solution, and the mixture was agitated with a wave rotor at 200 rpm for 60 min to give a paste D having a viscosity of 1000 cp (25°C).

### [Comparative Example 3]

### [Preparation of paste E]

A 110 ml glass bottle was charged with:
55 g of zirconia balls 10 mm in diameter (trade name: YTZ balls, available from Nikkato Corporation);
3. 47 g of platinum-supporting carbon black particles (Pt content: 46% by mass, carbon black content: 54% by mass);
5.61 g of distilled water;
12.84 g of a water-alcohol solution containing 20.6% Nafion (trade name, available from Dupont) (water:alcohol = 20:60);
21.05 g of n-propyl alcohol;
0.95 g of vapor grown carbon fiber (trade name: VGCF, available from Showa Denko K.K.); and
0.079 g of a dispersant (trade name: DA234, available from Kusumoto Chemicals, Ltd.).

They were agitated with a wave rotor at 60 rpm for 90 min to give a paste E having a viscosity of 900 cp (25°C).

### [Comparative Example 4]

### [Preparation of paste F]

A 110 ml glass bottle was charged with:
55 g of zirconia balls 10 mm in diameter (trade name: YTZ balls, available from Nikkato Corporation);
3.47 g of platinum-supporting carbon black particles (Pt content: 46% by mass, carbon black content: 54% by mass);
5.61 g of distilled water;
12.84 g of a water-alcohol solution containing 20.6% Nafion (trade name, available from Dupont) (water:alcohol = 20:60);
21.05 g of n-propyl alcohol; and
0.95 g of vapor grown carbon fiber (trade name: VGCF, available from Showa Denko K.K.).

They were agitated with a wave rotor at 200 rpm for 60 min to give a give a paste F having a viscosity of 1400 cp (25°C).

The pastes A to F were subjected to the following measurements and evaluations.

### (Evaluation of storage stability)

The pastes A to F were each placed in a 50 cc glass bottle and allowed to stand at room temperature for a week. The upper and lower portions of the paste in the bottle were collected each in an amount of 0.5 cc, and dried on a hot plate at 95°C for 10 min. Solid concentrations were compared between the upper and lower portions to determine whether sedimentation of particles had occurred.

### (Measurement of viscosity)

The viscosity was measured on a rheometer after 10 sec retention at a shear rate of 75 sec⁻¹.

### (Measurement of mean particle diameter)

On the assumption that the electrode layer formed had a structure in which sphere particles were closely arranged, the mean particle diameter was determined by particle size distribution analysis by a mercury penetration method using a mercury porosimeter.

### (Measurements of pore distribution and pore volume)

The pastes A to F were each applied on carbon paper in an amount in terms of platinum of 0.5 mg/cm², with use of a doctor blade. The resultant coatings were dried at 95°C for 10 min to form electrodes.

The pore distribution and pore volume of each electrode were measured by a mercury penetration method using a mercury porosimeter.

The results of the storage stability evaluation and measurements of mean particle diameter, viscosity, pore distribution and pore volume are set forth in Table 1.

**Table 1**

| | Paste | Process | Mean particle diameter (µm) | | Dispersant | Paste viscosity (CP) |
|---|---|---|---|---|---|---|
| | | | After first agitation | After second agitation | | |
| Ex. 1 | A | Two-step agitation | 4.0 µm | 2.5 µm | Used | 300 |
| Ex. 2 | B | Two-step agitation | 3.0 µm | 1.3 µm | Used | 350 |
| Comp. Ex. 1 | C | Two-step agitation | 3.0 µm | 0.15 µm | Used | 650 |
| Comp. Ex. 2 | D | Two-step agitation | 0.9 µm | 0.1 µm | Used | 1000 |
| Comp. Ex. 3 | E | One-step agitation | 0.15 µm | - | Used | 900 |
| Comp. Ex. 4 | F | One-step agitation | 1.5 | - | Not used | 1400 |
| | | | | | | |

| | Paste | Pore volume (ml/g) | | | | Storage stability |
|---|---|---|---|---|---|---|
| | | 0.01-0.1 µm | 0.1-1.0 µm | 1.0-10 µm | Total | |
| Ex. 1 | A | 0.40 | 0.40 | 0.05 | 0.85 | Good |
| Ex. 2 | B | 0.25 | 0.40 | 0.05 | 0.70 | Good |
| Comp. Ex. 1 | C | 0.18 | 0.05 | 0 | 0.23 | Bad |
| Comp. Ex. 2 | D | 0.17 | 0.02 | 0 | 0.19 | Bad |
| Comp. Ex. 3 | E | 0.18 | 0.03 | 0 | 0.21 | Bad |
| Comp. Ex. 4 | F | 0.10 | 0.24 | 0.06 | 0.40 | Bad |

### (Production of fuel cell and evaluation of its performance)

A 35 µm thick Nafion membrane was sandwiched between two electrodes produced as described above. They were hot-pressed at 160°C and 40 kg/cm² for 15 min to form an membrane-electrode assembly. Thereafter, the assembly was sandwiched between two titanium collectors, and a respective heater was provided outside each of the collectors. Thus, a fuel cell having an effective area of 25 cm² was prepared.

The temperature of the fuel cell was maintained at 50°C, and hydrogen and oxygen were supplied thereto at 90% or more relative humidity and 2 atmospheric pressure. Under these conditions, the voltage between the terminals was measured at a current density of 0.5 A/cm² and 1.0 A/cm².

Separately, the temperature of the fuel cell was maintained at 80°C, and hydrogen and oxygen were supplied thereto at 90% or more relative humidity and 2 atmospheric pressure. Under these conditions, the voltage between the terminals was measured at a current density of 0.5 A/cm² and 1.0 A/cm².

The voltages obtained in each case are shown in Table 2.

**Table 2**

| Temperature and humidity conditions | | Low temperature and high humidity (50°C and 90% or more RH) | | High temperature and high humidity (80°C and 90% or more RH) | |
|---|---|---|---|---|---|
| Current density (A/cm²) | | 0.5 | 1.0 | 0.5 | 1.0 |
| Terminal voltage (V) | Ex. 1 | 0.70 | 0.50 | 0.75 | 0.65 |
| | Ex. 2 | 0.65 | 0.45 | 0.70 | 0.60 |
| | Comp. Ex. 1 | 0.41 | - | 0.50 | - |
| | Comp. Ex. 2 | 0.35 | - | 0.45 | - |
| | Comp. Ex. 3 | 0.38 | - | 0.49 | - |
| | Comp. Ex. 4 | 0.45 | 0.25 | 0.53 | 0.32 |

A process of producing an electrode paste having excellent storage stability and capable of forming a catalyst layer that has a sufficient pore volume for high generating performance, and an electrode paste composition having such properties are disclosed. The process comprises mixing and agitating carbon black supporting a catalyst metal, a polymer electrolyte, an organic solvent and at least either carbon fiber or water thereby to finely disperse the carbon black to a predetermined mean particle diameter of 1.0 to 20 µm of particles dispersed in the mixed solution, and admixing a dispersant to the mixed solution and agitating the resultant mixture to obtain an electrode paste in which particles having a predetermined mean particle diameter of 0.2 to 5.0 µm are uniformly dispersed.

## Claims

1. A process of producing an electrode paste comprising mixing and agitating carbon black supporting a catalyst metal, a polymer electrolyte and an organic solvent thereby to gradually pulverize the carbon black into fine particles with a predetermined mean particle diameter of 1.0 to 20 µm dispersed in the mixed solution, and admixing a dispersant to the mixed solution and agitating the resultant mixture to obtain a paste in which particles having a mean particle diameter of 0.2 to 5.0 µm are uniformly dispersed.

2. The process of producing an electrode paste according to claim 1, the process comprising mixing and agitating carbon black supporting a catalyst metal, a polymer electrolyte, an organic solvent and carbon fibre thereby to gradually pulverize the carbon black into fine particles, and admixing a dispersant to the mixed solution.

3. The process of producing an electrode paste according to claim 1, the process comprising mixing and agitating the carbon black supporting a catalyst metal, the polymer electrolyte, the organic solvent and water thereby to gradually pulverize the carbon black into fine particles, and admixing a dispersant to the mixed solution.

4. The process of producing an electrode paste according to claim 2, the process comprising mixing and agitating the carbon black supporting a catalyst metal, the polymer electrolyte, the organic solvent, carbon fiber and water thereby to gradually pulverize the carbon blackinto fine particles, and admixing a dispersant to the mixed solution.

## Patentansprüche

1. Verfahren zur Herstellung einer Elektrodenpaste, umfassend das Mischen und Rühren von Ruß, der ein Katalysatormetall trägt, einem Polymerelektrolyten und einem organischen Lösungsmittel, um **dadurch** den Ruß allmählich zu feinen Partikeln mit einem vorgegebenen mittleren Partikeldurchmesser von 1,0 bis 20 µm, die in dem Lösungsgemisch dispergiert sind, zu pulverisieren, und das Beimischen eines Dispergiermittels zu dem Lösungsgemisch und das Rühren der resultierenden Mischung, um eine Paste zu erhalten, in der Partikel, die einen mittleren Partikeldurchmesser von 0,2 bis 5,0 µm aufweisen, gleichmäßig dispergiert sind.

2. Verfahren zur Herstellung einer Elektrodenpaste gemäß Anspruch 1, wobei das Verfahren das Mischen und Rühren von Ruß, der ein Katalysatormetall trägt, einem Polymerelektrolyten, einem organischen Lösungsmittel und Kohlefaser umfasst, um **dadurch** den Ruß allmählich zu feinen Partikeln zu pulverisieren, und das Beimischen eines Dispergiermittels zu dem Lösungsgemisch.

3. Verfahren zur Herstellung einer Elektrodenpaste gemäß Anspruch 1, wobei das Verfahren das Mischen und Rühren des Rußes, der ein Katalysatormetall trägt, des Polymerelektrolyten, des organischen Lösungsmittels und von Wasser umfasst, um **dadurch** den Ruß allmählich zu feinen Partikeln zu pulverisieren, und das Beimischen
eines Dispergiermittels zu dem Lösungsgemisch.

4. Verfahren zur Herstellung einer Elektrodenpaste gemäß Anspruch 2, wobei das Verfahren das Mischen und Rühren des Rußes, der ein Katalysatormetall trägt, des Polymerelektrolyten, des organischen Lösungsmittels, von Kohlefaser und von Wasser umfasst, um **dadurch** den Ruß allmählich zu feinen Partikeln zu pulverisieren, und das Beimischen eines Dispergiermittels zu dem Lösungsgemisch.

## Revendications

1. Procédé de fabrication d'une pâte d'électrode, comprenant le mélange et l'agitation d'un noir de carbone supportant un métal catalyseur, d'un électrolyte polymère et d'un solvant organique de façon à pulvériser progressivement le noir de carbone en particules fines, ayant un diamètre moyen de particule prédéterminé de 1,0 à 20 µm, dispersées dans la solution mixte, et l'adjonction d'un dispersant à la solution mixte et l'agitation du mélange résultant pour obtenir une pâte dans laquelle des particules ayant un diamètre moyen de particule de 0,2 à 5,0 µm sont uniformément dispersées.

2. Procédé de fabrication d'une pâte d'électrode selon la revendication 1, le procédé comprenant le mélange et l'agitation d'un noir de carbone supportant un métal catalyseur, d'un électrolyte polymère, d'un solvant organique et d'une fibre de carbone, de façon à pulvériser progressivement le noir de carbone en particules fines, et l'adjonction d'un dispersant à la solution mixte.

3. Procédé de fabrication d'une pâte d'électrode selon la revendication 1, le procédé comprenant le mélange et l'agitation du noir de carbone supportant un métal catalyseur, de l'électrolyte polymère, du solvant organique et d'eau, de façon à pulvériser progressivement le noir de carbone en particules fines, et l'adjonction d'un dispersant à la solution mixte.

4. Procédé de fabrication d'une pâte d'électrode selon la revendication 2, le procédé comprenant le mélange et l'agitation du noir de carbone supportant un métal catalyseur, de l'électrolyte polymère, du solvant organique, d'une fibre de carbone et d'eau, de façon à pulvériser progressivement le noir de carbone en particules fines, et l'adjonction d'un dispersant à la solution mixte.
